# EUROPEAN PATENT SPECIFICATION

(11) **EP 2 416 232 B1**
(45) Date of publication and mention of the grant of the patent: **08.05.2019**
(21) Application number: 10758778.4
(22) Date of filing: 31.03.2010
(51) Int. Cl.: H04M 1/02, H04M 1/247, G06F 1/16, G06F 3/0481

(54) **MOBILE TERMINAL DEVICE, CONTROL PROGRAM AND MULTIPLE DISPLAY SCREEN CONTROL METHOD**
MOBILES ENDGERÄT SOWIE STEUERPROGRAMM UND VERFAHREN ZUR STEUERUNG VON MEHREREN ANZEIGEN
DISPOSITIF TERMINAL MOBILE, PROGRAMME DE COMMANDE ET PROCÉDÉ DE COMMANDE DE MULTIPLES ÉCRANS D'AFFICHAGE

(30) Priority: 31.03.2009 JP 2009086635
(43) Date of publication of application: 08.02.2012
(73) Proprietor: NEC Corporation, Tokyo 108-8001 (JP)
(72) Inventor: OHSAKI, Yasunari, Tokyo 108-8001 (JP)
(74) Representative: Glawe, Delfs, Moll
(86) International application number: PCT/JP2010/055819
(87) International publication number: WO 2010/114007

(56) References cited:
- WO-A1-03/077098
- JP-A- 2003 198 685
- US-A1- 2002 037 754
- US-A1- 2003 092 401
- US-A1- 2005 248 501
- US-A1- 2006 211 454

## Description

### TECHNICAL FIELD

### (Description of Related Application)

This application claims the benefit of Japanese Patent Application No. 2009-086635, filed on March 31, 2009. The present invention relates to a mobile terminal device such as a mobile telephone or the like, and a control program and multiple display screen control method therefor. In particular, the invention relates to a mobile terminal device in which multiple screens can display simultaneously.

### BACKGROUND

In conventional general mobile terminal devices, various types of application software such as a mailer, a browser, or the like, are displayed in a main display screen of a display unit. A user executes a prescribed operation while browsing a screen displayed in a display region by using an operation unit. However, in a case where during a task it is necessary to perform a task using another application, it has been necessary to temporarily end the application currently in operation and then newly start another application.

In order to solve this problem, Patent Document 1 proposes a mobile terminal device that enables switching of a main display screen, by selecting icons corresponding to respective applications generated on a sub-display screen.

Furthermore, Patent Document 2 and Patent Document 3 disclose a mobile terminal device provided with a second main display unit having a second main display screen connected by a hinge unit or by a slide system with a main display unit, wherein two screens are displayed at the same time. According to these inventions, a user can carry out an operation while browsing two screens at the same time.
A mobile terminal device according to the preamble of claim 1 is known from US 2006/211454 A1 and US 2005/248501 A1.

### PRIOR ART DOCUMENT

### PATENT DOCUMENT

[Patent Document 1] Japanese Patent Kokai Publication No. JP2003-162355A
[Patent Document 2] Japanese Patent Kokai Publication No. JP2008-182289A
[Patent Document 3] Japanese Patent Kokai Publication No. JP2003-198685A

### SUMMARY

The following analysis is given by the present invention. A mobile terminal device described in the abovementioned Patent Document 1 only has one main display screen, and switching of application according to icon selection can only be done on the same screen. In a mobile terminal device that displays two screens at the same time, the screens being foldably connected by a hinge unit, as in the abovementioned Patent Document 2 and Patent Document 3, since a main display screen is provided as two screens, there is an improvement in this point, but an implementation has not been realized in practice. A reason for this may be considered to be difficulties in operability with regard to controlling the two screens with few keys on the mobile terminal device. For example, by a method such as selecting an icon from the main display screen, it is possible to display a new application on a second main display screen. However, according to Patent Document 2 or Patent Document 3, a screen that is a target for operation moves to the second main display screen, and until functions of the second main display screen are ended, it is not possible to perform an operation on the original main display screen. In particular with regard to a mobile terminal device with a small number of keys, it is difficult to provide a key dedicated to switching the screen that is a target for operation. There is no mention in Patent Document 1 also concerning a method of controlling switching of the two screens.

A mobile terminal device, a multiple display screen control method, a control program for the mobile terminal device and a computer readable recording medium according to the present invention are given in the respective independent claims. The dependent claims recite preferred embodiments of the invention.

### BRIEF DESCRIPTION OF THE DRAWINGS

Fig. 1 is a plane view (a two-screen display state, when in use) of a mobile terminal device according to an exemplary embodiment of the present invention;
Fig. 2 is a side view (a folded state, when not in use) of the mobile terminal device according to an exemplary embodiment of the present invention;
Fig. 3 is a plane view (a one-screen display state, when in use) of the mobile terminal device according to an exemplary embodiment of the present invention;
Fig. 4 is a block diagram showing an internal configuration of the mobile terminal device according to an exemplary embodiment of the present invention;
Fig. 5 is a display example (a program listing display in a one-screen display state) of the mobile terminal device according to an exemplary embodiment of the present invention;
Fig. 6 is another display example (a program listing one-screen display in a two-screen display state) of the mobile terminal device according to an exemplary embodiment of the present invention;
Fig. 7 is a further display example (one-segment broadcasting + program listing display in a two-screen display state) of the mobile terminal device according to an exemplary embodiment of the present invention;
Fig. 8 is an even further display example (new mail + information search display in a two-screen display state) of the mobile terminal device according to an exemplary embodiment of the present invention; and
Fig. 9 is an even further display example (new mail + received mail display in a two-screen display state) of the mobile terminal device according to an exemplary embodiment of the present invention.

### PREFERRED MODES

Possible or preferable modes of the present invention are indicated below.

### (Mode 1)

Mode 1 is according to the previously described first aspect.

### (Mode 2)

The second main display unit is preferably connected by a hinge unit or by a slide system with the first main display unit.

### (Mode 3)

An operation unit that has input keys is further provided, wherein the first main display unit and the operation unit are preferably foldably connected by a hinge unit.

### (Mode 4)

The first main display unit and the second main display unit are preferably connected by a hinge unit, the second main display unit comprises a third display screen on a rear side of the second display screen, and, when the display state detection unit detects that the first main display unit and the second main display unit are in a folded state, displays of both the first display screen and the second display screen are stopped, and the third display screen is preferably displayed.

### (Mode 5)

When the display state detection unit detects a change from a folded state to an open state, display content that is displayed on the third display screen is preferably displayed on the second display screen, and the operation target screen switching icon display unit preferably displays the operation target screen switching icon on the second display screen.

### (Mode 6)

The second main display unit is preferably configured to be attachable and detachable relative to the first main display unit.

### (Mode 7)

Mode 7 is according to the previously described second aspect.

### (Mode 8)

In the mobile terminal device configured such that the first main display unit and the second main display unit are folded, with the first display screen and the second display screen facing each other, by a hinge unit, and a third display screen provided on a rear side of the second display screen is exposed on a front face, instead of the first display screen, a program of the mobile terminal device preferably further executes, on the control unit: a step, when the display state detection unit detects that the first main display unit and the second main display unit are in a folded state, of stopping displaying on the first main display unit and the second main display unit, and of making a display on the third display screen; and a step, when the display state detection unit detects a change from a folded state to an open state, of displaying, on the second display screen, display content displayed on the third display screen, and also of displaying the operation target screen switching icon on the second display screen.

### (Mode 9)

Mode 9 is according to the previously described third aspect.

### (Mode 10)

In the mobile terminal device configured such that the first main display unit and the second main display unit are folded, with the first display screen and the second display screen facing each other, by a hinge unit, and a third display screen provided on a rear side of the second display screen is exposed on a front face, instead of the first display screen, displaying on the first main display unit and the second main display unit is preferably stopped and a display is made on the third display screen, when the display state detection unit detects that the first main display unit and the second main display unit are in a folded state, and display content displayed on the third display screen is preferably displayed on the second display screen, and the operation target screen switching icon is preferably displayed on the second display screen, when the display state detection unit detects a change from a folded state to an open state.

### (Mode 11)

A computer readable recording medium preferably stores the control program according to the abovementioned Mode 7 or 8.

A supplementary description is given concerning the abovementioned Mode 1 to Mode 11. It is to be noted that in the supplementary description, reference is made to the drawings as necessary. Furthermore, the drawings and reference symbols in the drawings cited in the supplementary description are shown as an example of exemplary embodiments, and variations of the exemplary embodiments in the present invention are not intended to be limited thereby.

The mobile terminal device in the above modes is provided with a first main display unit that has a first display screen, and a second main display unit that has a second display screen which can provide a display equivalent to the first display screen, and is foldable with respect to the first main display unit. That is, the first main display unit having the first display screen, and the second main display unit having the second display screen are provided, and since the second main display unit is foldable with respect to the first main display unit, it is possible to display double the normal amount of information, without increasing area when folded away.

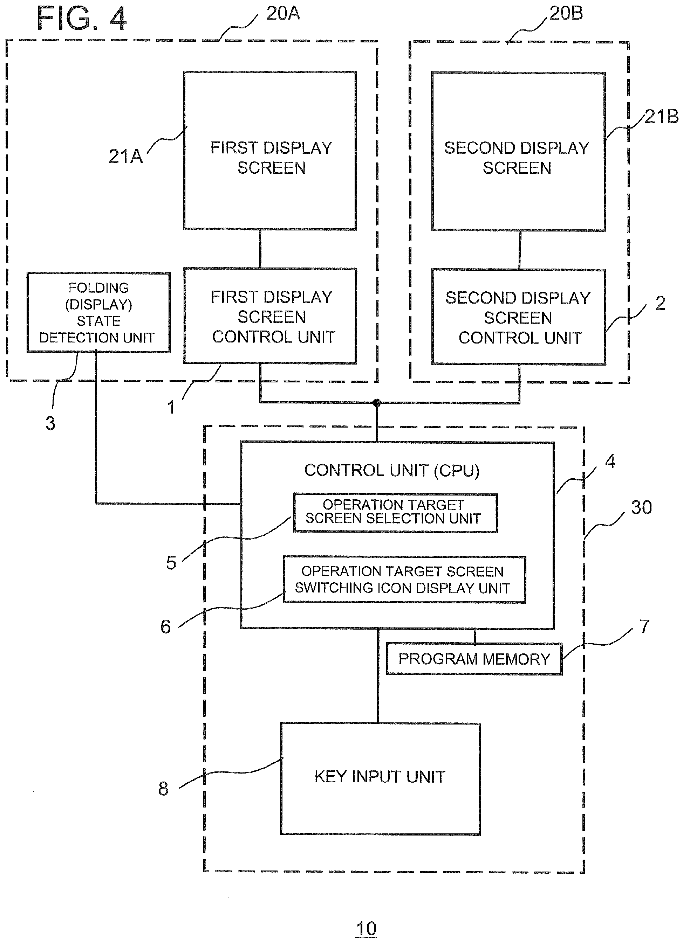

Furthermore, since a folded (display) state detection unit (3 in Fig. 4) that detects whether or not both the first display screen and the second display screen are in a state where simultaneous display is possible, it is possible to automatically judge whether or not a two-screen display is possible, by the folded (display) state detection unit, and to perform an appropriate display.

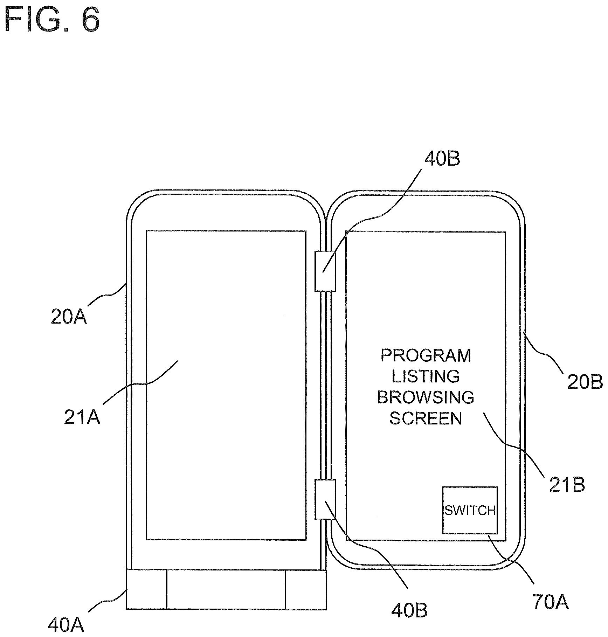

In addition, there are provided: an operation target screen selection unit (5 in Fig. 4) that executes, when the folded (display) state detection unit detects that both the first display screen and the second display screen are in a state where display is possible, a function to select, among the first display screen and the second display screen, a screen that is a target for operation; and an operation target screen switching icon display unit (6 in Fig. 4) that executes a function to display an operation target screen switching icon (70A and 70B in Fig. 6 to Fig. 9) at least on the screen selected by the operation target screen selection unit; wherein the operation target screen selection unit switches selection of the operation target screen when the operation target screen switching icon is selected. That is, when two screens are switchable, it is possible to display the operation target screen switching icon on the screen that is a target for operation, and by selecting the icon, it is possible to switch, among the two screens, the screen that is a target for operation. According to abovementioned configuration, in a mobile terminal device where it is not possible to provide a large number of operation keys, it is possible to easily perform an operation with regard to an application on either screen, among applications on the two screens displayed at the same time.

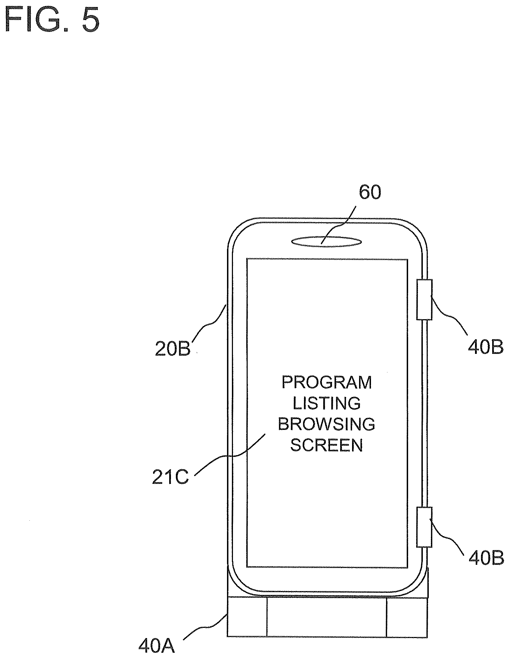

In addition, in particular as shown in Fig. 5 and Fig. 6, the first main display unit (20A) and the second main display unit (20B) are connected by the hinge unit (40B), the second main display unit is provided with a third display screen (21C) on a rear side of the second display screen (21B), and when the folded (display) state detection unit detects that the first main display unit and the second main display unit are in a state of being folded about the hinge unit, displays of both the first display screen and the second display screen are stopped, and the third display screen is displayed (refer to Fig. 5). That is, the present invention is not limited to this configuration, and when the first main display unit and the second main display unit are folded such that the first display screen and the second display screen are facing each other, since both the first display screen and the second display screen can no longer be seen from outside, a display is performed by a third display screen provided on the rear side of the second display screen.

Furthermore, when the folded (display) state detection unit detects a change from a folded state to an open state, display content that is displayed on the third display screen (21C in Fig. 5) is displayed on the second display screen (21B of Fig. 6), and the operation target screen switching icon display unit displays the operation target screen switching icon on the second display screen.

In addition, if the mobile terminal device of the abovementioned modes is at least provided with a control unit (4 in Fig. 4) that controls functional operation of the mobile terminal device, switching of the screen that is an operation target is possible by the control program.

Furthermore, according to a multiple display screen control method of the mobile terminal device of the abovementioned modes, if the mobile terminal device is provided with an icon selection means for selecting an icon displayed on a display screen, it is possible to display the operation target screen switching icon on the screen, and by selection of the icon displayed thereon by the icon selection means, it is possible to switch the screen that is a target for operation, from among the displayed screens. Detailed description is given below concerning exemplary embodiments, making reference to the drawings.

### (Exemplary Embodiment 1)

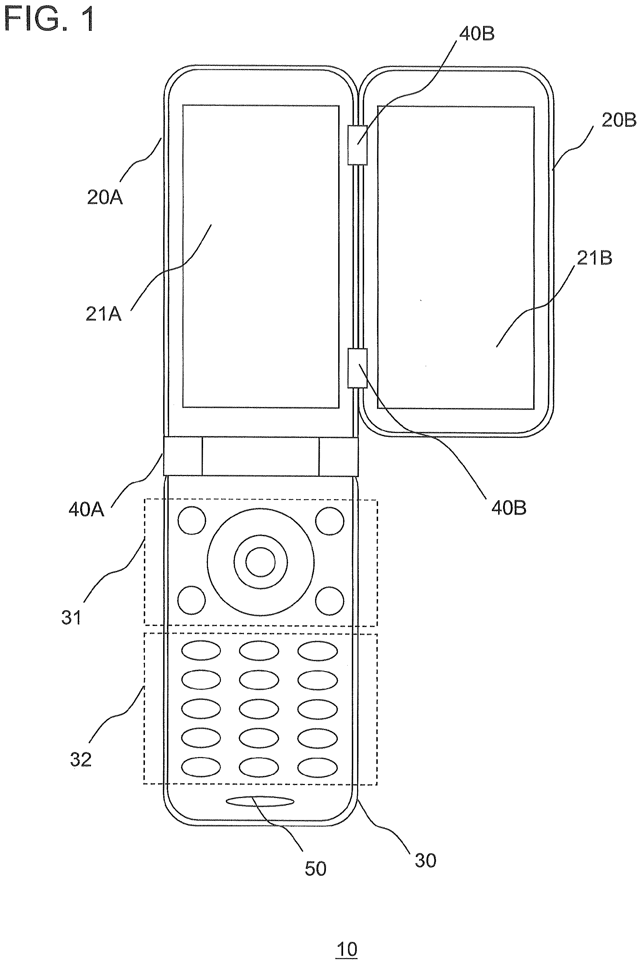

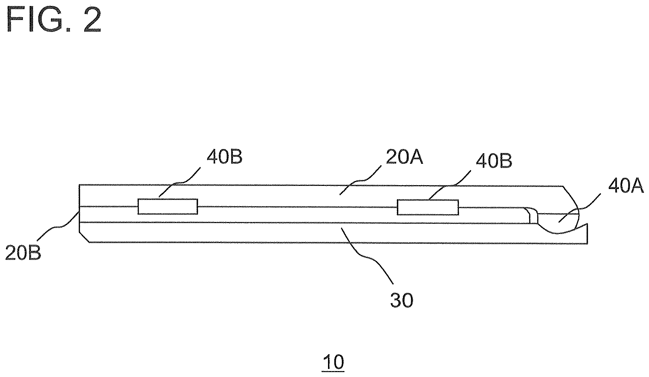

Fig. 1 to Fig. 3 are drawings showing external views of a mobile terminal device of the present exemplary embodiment. In Fig. 1, the mobile terminal device 10 has what is called a folding type of configuration in which a first main display unit 20A having a display function that is a main display, and an operation unit 30 having operation keys 31 to execute selection and determination of a screen, and input keys 32 as in a numeric keypad or the like to perform key input, are connected to one another via a hinge unit 40A. Fig. 1 shows a state where the mobile terminal device 10 is in use (the terminal is opened), and Fig. 2 shows a state where the mobile terminal device 10 is not in use (the terminal is closed).

The first main display unit 20A in Fig. 1 and a second main display unit 20B are connected to one another via a hinge unit 40B, and the second main display unit 20B is opened and closed relative to the first main display unit 20A by rotating the second main display unit 20B with the hinge unit 40B as pivot axis. A first display screen 21A and a second display screen 21B, in which various applications are displayed, are respectively disposed in the first main display unit 20A and the second main display unit 20B, and a microphone 50, in addition to the operation keys 31 and the input keys 32 are disposed in the operation unit 30. Furthermore, a folded (display) state detection unit (3 in Fig. 4, to be described later), which is a sensor that responds according to an open-close angle of the second main display unit 20B, for example, is built in, inside the first main display unit 20A.

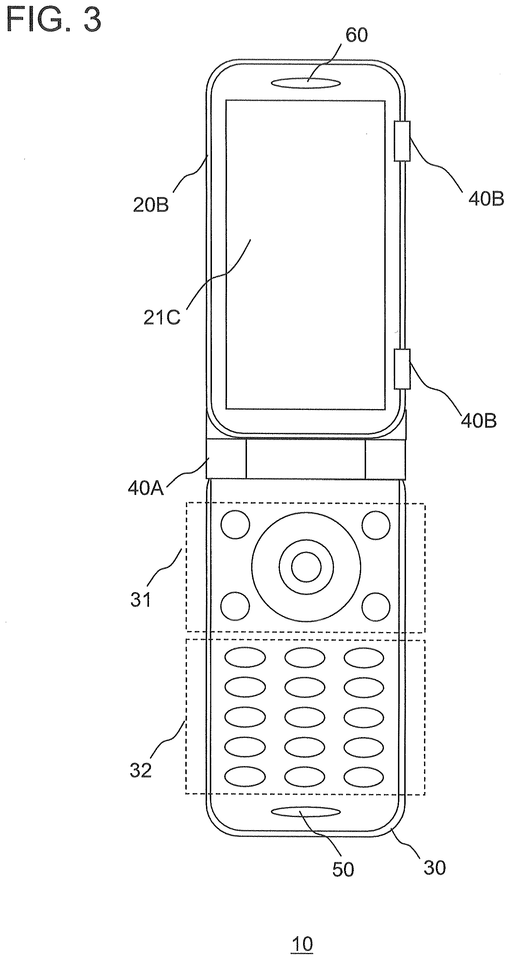

Fig. 3 is an external view of the mobile terminal device 10 with only the second main display unit 20B of the main terminal closed. In this drawing, the second main display unit 20B has a third display screen 21C and a speaker for conversation (receiver) 60 provided on a rear side of the second display screen 21B, and usage by a user is possible with the second main display unit 20B superimposed on the first main display unit 20A, without difference from a conventional folding type mobile terminal device having only one display unit. That is, the second display screen 21B and the third display screen 21C are provided respectively on the front and rear of the second main display unit 20B. With regard to switching of the screen displays of the front and rear display regions, the folded (display) state detection unit (3 in Fig. 4, to be described later), which is a sensor built into the first main display unit 20A, detects an open-close angle of the second main display unit 20B, and switching takes place automatically.

Fig. 4 is a block diagram showing an internal configuration of the mobile terminal device 10 according to the present exemplary embodiment. The mobile terminal device 10, broadly divided, is configured by the first main display unit 20A, the second main display unit 20B, and the operation unit 30.

The first main display unit 20A is provided with the first display screen 21A, a first display screen control unit 1 that directly controls the first display screen 21A, and the folded (display) state detection unit 3. The folded (display) state detection unit 3 outputs, as a folded (display) state detection signal, whether the first main display unit 20A and the second main display unit 20B are open, with the hinge unit 40B as an axis, so that a simultaneous display is possible on screens of both the first display screen 21A and the second display screen 21B, or whether the first main display unit 20A and the second main display unit 20B are folded about the hinge unit 40B, and even with a simultaneous display, the state is such that the user cannot perform visual confirmation thereof.

Furthermore, the second main display unit 20B is provided with the second display screen 21B and a second display screen control unit 2 that directly controls the second display screen 21B.

The control unit 30 is provided with the control unit (CPU) 4, a key input unit 8, and in addition, a program memory 7. The operation keys 31 and the input keys 32, described in Fig. 1 and Fig. 3, are connected to the key input unit 8, and information inputted from the keys is transmitted to the control unit 4. The control unit 4 functions as an operation target screen selection unit 5 and an operation target screen switching icon display unit 6, by a program stored in the program memory 7.

The operation target screen selection unit 5 has a switching function with regard to which display screen, among the two screens, key input that has been inputted from the key input unit 8 is directed towards, in a case where the folded (display) state detection unit 3 detects that both the first display screen 21A and the second display screen 21B are in a state where simultaneous display is possible. Based on information (a process) of the operation target screen selection unit 5 and the key by which input was performed from the key input unit 8, the control unit 4 performs an operation with respect to an application displayed on one among the two screens, and gives an instruction to the first display screen control unit 1 or the second display screen control unit 2 to display a result thereof on a corresponding screen. Furthermore, in a case where the operation target screen switching icon (70A, 70B in Fig. 6 to Fig. 9) is selected by a signal from the key input unit 8, the operation target screen selection unit 5 performs switching, among the two screens displayed at the same time, of a screen that is a target for key operation thereafter. Since switching is performed with respect to the screen that is a target for operation by the operation target screen selection unit 5, the user can perform an operation with regard to the screen that is a target for operation the same as with a normal one-screen display.

In a case where the two screen displays are possible, the operation target screen switching icon display unit 6 controls the first display screen control unit 1 or the second display screen control unit 2 so as to display the operation target screen switching icon on a screen that has become a target for operation according to the operation target screen selection unit 5. It is to be noted that with regard to the operation target screen switching icon, a display may be left on the screen that is not a target for operation. Since the operation target screen switching icon is displayed on the screen that is a target for operation by the operation target screen switching icon display unit 6, the user can easily switch the screen that is a target for operation, among the two screen displays. That is, with multiple screens open at the same time the user can perform an operation on any screen, by the operation target screen selection unit 5 and the operation target screen switching icon display unit 6.

It is to be noted that in Fig. 4, the first display screen control unit 1 and the second display screen control unit 2 are separated from the control unit 4, but functions of the first display screen control unit 1 and the second display screen control unit 2 may be given to the control unit 4. Furthermore, in Fig. 4, the first display screen control unit 1 and the folded (display) state detection unit 3 are provided in the first main display unit 20A, the second display screen control unit 2 is provided in the second main display unit 20B, and the control unit 4 is provided in the operation unit 30, but the first display screen control unit 1, the second display screen control unit 2, the folded (display) state detection unit 3, and the control unit 4 may be provided anywhere in the first main display unit 20A, the second main display unit 20B, and the control unit 30.

Next, a description is given of a series of operations that can be realized by the present exemplary embodiment, using Fig. 5 to Fig. 9. In Fig. 5 to Fig. 9, as an operation in a preferred exemplary embodiment, switching occurs when the user executes a prescribed operation, and applications are shown that are displayed respectively in the first display screen 21A, the second display screen 21B, and the third display screen 21C, of the first main display unit 20A and the second main display unit 20B.

First, as in Fig. 5 the user starts up a browser and browses a program listing. While browsing, since the user finds a program in the program listing that he or she wishes to see, by rotating the second main display unit 20B with the hinge unit 40B as pivot axis, the user can switch the program listing screen of the browser, by the folded (display) state detection unit 3 (for example, an angle detection sensor), from the third display screen 21C to the second display screen 21B (Fig. 6). At this time, the operation target screen switching icon 70A, to be selected when switching an operation target screen, is newly generated within the second display screen 21B.

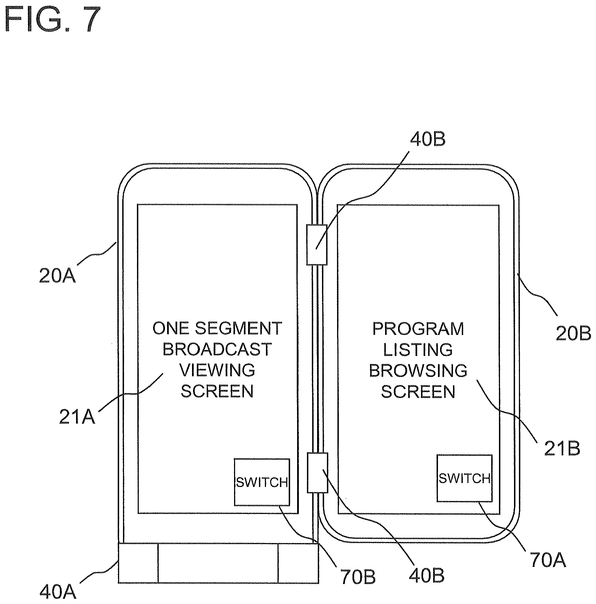

Next, with a prescribed operation, that is, by using the operation keys 31, a cursor is moved to the operation target screen switching icon 70A in the second display screen 21B, and a selection is made to determine screen switching. In addition, after switching the operation target screen to the first display screen 21A, one segment broadcasting (one segment reception service, such as terrestrial digital television broadcasting targeted at mobile terminal devices such as cell phones and the like) is started up on the first display screen 21A, and while browsing the program listing on the second display screen 21B and confirming a program displayed on the first display screen 21A, the screen is switched to a desired channel (Fig. 7). Here, when the operation target screen is switched from the second display screen 21B to the first display screen 21A, an operation target screen switching icon 70B is newly generated within the first display screen 21A. It is to be noted that, as an operation when a window with no application started up is activated, a setting is necessary such that a prescribed default screen (for example, a standby screen) is displayed, but there is no special stimulation in this regard. It is possible to display an arbitrary screen. If an application is started up, it is possible to continue with an operation target screen as is.

At this time, a one segment viewing screen is shown on the first display screen 21A, and a program is displayed by a browser on the second display screen 21B (Fig. 7). Here, for example, it is possible to select the operation target screen switching icon 70B on the first display screen 21A, move the operation target screen to the second display screen 21B where the program listing is re-displayed, and continue browsing. If it is desired to view another broadcast, it is possible to move operation to the one segment viewing screen again by a similar procedure.

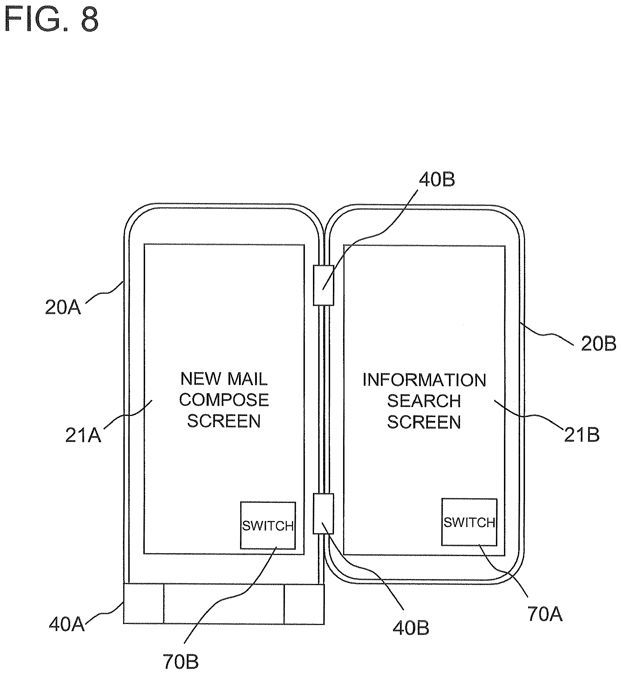

Next, information of interest in a program being viewed is obtained, and in order to investigate in more depth concerning this information, a URL of an information search site is inputted in the program listing screen of the second display screen 21B, or if there is a link in this screen, the second display screen 21B is switched to a search screen by selecting this link, and a search is executed. In a case where this information is noted in a mail and transmitted to a friend, in the same way as described above, the operation target screen switching icon 70A in the second display screen 21B is selected, a mailer is started up in the first display screen 21A, and composition of text is performed. At this time also, composition of the mail can be carried out while viewing a search result in the browser (Fig. 8).

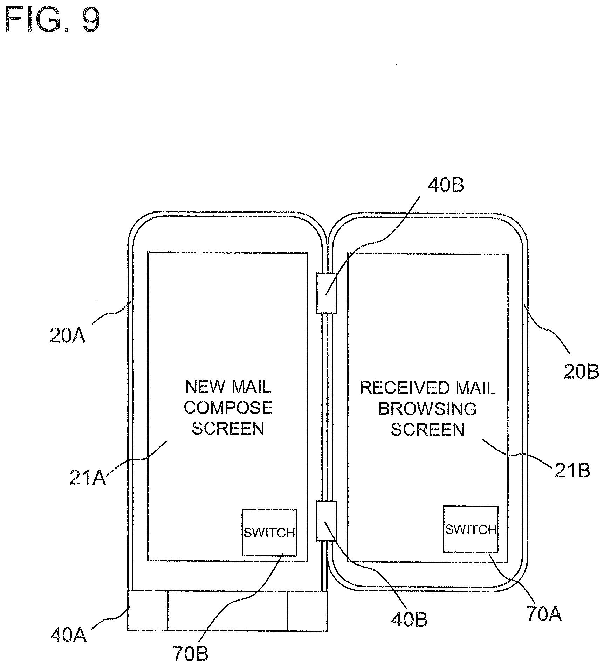

In addition, while browsing the content of a received mail transmitted previously by the friend, a portion is extracted and added to the mail being composed. In this case also, in the same way, first the operation target screen switching icon 70B that is in the first display screen 21A is selected, and the content of the received mail is displayed in the second display screen 21B. Thereafter, while browsing the two screens in parallel, a place that is desired to be extracted from the reference mail of the second display screen 21B is copied as necessary and pasted to the mail being composed in the first display screen 21A. By appropriately selecting the operation target screen switching icons 70A and 70B, the above type of task is executed while switching screens (Fig. 9).

In other cases also, according to the present invention, since related applications are displayed on two screens, and with regard to either of the screens, a screen that is a target of operation can be easily switched to perform operations in parallel, many combinations of useful applications can be considered. One example thereof is shown in Table 1.

**(Table 1)**

| Display Screen (1) | Display Screen (2) | Effect |
|---|---|---|
| One segment broadcasting | Browser (program listing) | Possible to switch channel while browsing program content in the program listing. |
| Mailer (compose text) | Browser (information search) | Possible to compose mail while browsing/ confirming information obtained by search. |
| Mailer (compose text) | Mailer (send/receive mail) | Possible to compose mail while browsing/ confirming transmitted and received mail. Extraction is easy by copying and pasting. |
| Telephone directory (edit) | Browser (information search) | (Example) In a case of registering a favorite store, possible to register while confirming information displayed in a search result. |
| Telephone directory (edit) | Mailer (send/receive mail) | In a case of registering a new acquaintance, possible to register while confirming name and other information described in mail text. |
| Function setting | Various types of applications | Possible to make changes while instantly confirming function setting |
| Schedule (edit) | Schedule (listing) | Possible to adjust future schedule while confirming near future appointments |
| Music player | Melody (voice) recording | In a case of recording only a portion of the music (voice), possible to record at good timing while confirming progress status and time |
| One segment broadc as ting | Melody (voice) recording | In a case of recording only a portion of the music (voice), possible to record at good timing while viewing a screen (effectively avoiding unnecessary recording (CM and the like)) |
| One segment broadcasting | Movie | Possible to simultaneously view two screens, one segment broadcasting and video stored as data |
| Game | Browser (information search) | Possible to play a game while browsing a method of attack displayed in a search result |

It is to be noted that the abovementioned display screen (1) and the display screen (2) can be displayed on either of the first display screen 21A and the second display screen 21B.

It is to be noted that in the abovementioned exemplary embodiment, the second main display unit 20B is foldably connected to the first main display unit 20A by the hinge unit 40B, but the second main display unit 20B may be connected to the first main display unit 20A by a slide system (mechanism) instead of the hinge unit 40B.

Furthermore, a configuration is also possible in which the second main display unit 20B is attachable and detachable relative to the first main display unit 20A.

Descriptions concerning the exemplary embodiments have been given above but the present invention is not limited to only configurations of the abovementioned exemplary embodiments, and clearly includes every type of transformation and modification that a person skilled in the art can realize within the bounds of the invention. That is, modifications and adjustments of embodiments and examples are possible within the bounds of the entire disclosure (including the scope of the claims) of the present invention, and also based on fundamental technological concepts thereof. Furthermore, a wide variety of combinations and selections of various disclosed elements is possible within the scope of the claims of the present invention.

### EXPLANATIONS OF SYMBOLS

- 1: first display screen control unit
- 2: second display screen control unit
- 3: folding (display) state detection unit
- 4: control unit (CPU)
- 5: operation target screen selection unit
- 6: operation target screen switching icon display unit7 program memory8 key input unit
- 10: mobile terminal device
- 20A: first main display unit
- 20B: second main display unit
- 21A: first display screen
- 21B: second display screen
- 21C: third display screen
- 30: operation unit
- 31: operation keys
- 32: input keys
- 40A, 40B: hinge unit
- 50: microphone
- 60: speaker for conversation (receiver)
- 70A, 70B: operation target screen switching icon

## Claims

1. A mobile terminal device (10) comprising:
a first main display unit (20A) that has a first display screen (21A);
a second main display unit (20B) that has a second display screen (21B) which can provide a display equivalent to said first display screen (21A), said second main display unit (20B) being connected so as to be capable of being juxtaposed to said first main display unit (20A);
a control unit (4) adapted to perform overall control;
a display state detection unit (3) that is adapted to detect whether or not both said first display screen (21A) and said second display screen (21B) are in a state where simultaneous display is possible;
an operation target screen selection unit (3) that is adapted to execute a function to select, among said first display screen (21A) and said second display screen (21B), a screen that is a target for operation; and
an operation target screen switching icon display unit (6) that is adapted to execute a function to display an operation target screen switching icon (70A, 70B) at least on the screen selected by said operation target screen selection unit (3), when said display state detection unit (3) detects that both said first display screen (21A) and said second display screen (21B) are in a state in which display is possible, wherein
said operation target screen selection unit (3) is adapted to switch selection of an operation target screen when said operation target screen switching icon (70A, 70B) is selected;
said first main display unit (20A) and said second main display unit (20B) are connected by a hinge unit (40B);
said second main display unit (20B) comprises a third display screen (21C) on a rear side of said second display screen (21B);
when said display state detection unit (3) detects a change from a folded state to an open state, the mobile terminal device is adapted to switch automatically, from said third display screen (21C) to said second display screen (21B), the display content of an application that has been displayed on said third display screen (21C), and said operation target screen switching icon display unit (6) is adapted to generate said operation target screen switching icon (70A, 70B) on said second display screen (21B); and
when said display state detection unit (3) detects that said first main display unit (20A) and said second main display unit (20B) are in a folded state, the mobile terminal device is adapted to stop displaying of both said first display screen (21A) and said second display screen (21B), and to display, on said third display screen (21C), display content of an application.

2. The mobile terminal device according to claim 1, **characterized in that** said second main display unit (20B) is connected by a hinge unit or by a slide system with said first main display unit (20A).

3. The mobile terminal device according to claim 1 or 2, **characterized by** further comprising an operation unit (30) that has input keys (32), wherein said first main display unit (20A) and said operation unit (30) are foldably connected by a hinge unit (40A).

4. The mobile terminal device according to any one of claims 1 to 3, **characterized in that** said second main display unit (20B) is configured to be attachable and detachable relative to said first main display unit (20A).

5. A control program for a mobile terminal device according to any one of claims 1 to 4, said control program executing, on said control unit (4):
a step, when said display state detection unit (3) detects that a display screen state has changed from a one-screen display state to a state in which display is possible by both said first display screen (21A) and said second display screen (21B), of displaying on one of said first display screen (21A) or said second display screen (21B) a display in which an operation target screen switching icon (70A, 70B) is added to content displayed in said one-screen display state; and
a step, when a detection is made that said operation target screen switching icon (70A, 70B) has been selected, of switching a screen that is a target for operation from one of said first display screen (21A) or said second display screen (21B) to another thereof,
said control program further executing, on said control unit (4):
a step, when said display state detection unit (3) detects a change from a folded state to an open state, of switching automatically, from said third display screen (21C) to said second display screen (21B), the display content of an application that has been displayed on said third display screen (21C), and also generating said operation target screen switching icon (70A, 70B) on said second display screen (21B); and
a step, when said display state detection unit (3) detects that said first main display unit (20A) and said second main display unit (20B) are in a folded state, of stopping displaying of both said first display screen (21A) and said second display screen (21B), and displaying, on said third display screen (21C), display content of an application.

6. A multiple display screen control method for a mobile terminal device according to any one of claims 1 to 4, said method comprising the steps of:
displaying on one of said first display screen (21A) or said second display screen (21B) a display in which an operation target screen switching icon (70A, 70B) is added to content displayed in a one-screen display state, when said display state detection unit (3) detects that a display screen state has changed from said one-screen display state to a state in which display is possible by both said first display screen (21A) and said second display screen (21B); and
switching a screen that is a target for operation from one of said first display screen (21A) or said second display screen (21B) to another thereof, when said operation target screen switching icon (70A, 70B) is selected by said icon selection means,
switching automatically, from said third display screen (21C) to said second display screen (21B), the display content of an application that has been displayed on said third display screen (21C), and also generating said operation target screen switching icon (70A, 70B) on said second display screen (21B), when said display state detection unit (3) detects a change from a folded state to an open state; and
stopping displaying of both said first display screen (21A) and said second display screen (21B) and displaying, on said third display screen (21C), display content of an application, when said display state detection unit (3) detects that said first main display unit (20A) and said second main display unit (20B) are in a folded state.

7. A computer readable recording medium that stores said control program according to claim 5.

## Patentansprüche

1. Mobiles Endgerät (10), das umfasst:
eine erste Hauptanzeigeeinheit (20A), die einen ersten Anzeigeschirm (21A) aufweist;
eine zweite Hauptanzeigeeinheit (20B), die einen zweiten Anzeigeschirm (21B) aufweist, der eine Anzeige bereitstellen kann, die dem ersten Anzeigeschirm (21A) äquivalent ist, wobei die zweite Hauptanzeigeeinheit (20B) so verbunden ist, dass sie geeignet ist, der ersten Hauptanzeigeeinheit (20A) gegenübergestellt zu werden;
eine Steuereinheit (4), die angepasst ist, eine übergeordnete Steuerung auszuführen;
eine Anzeigezustandserfassungseinheit (3), die angepasst ist zu erfassen, ob sowohl der erste Anzeigeschirm (21A) als auch der zweite Anzeigeschirm (21B) in einem Zustand sind, in dem eine gleichzeitige Anzeige möglich ist, oder nicht;
eine Bedienungszielschirm-Auswahleinheit (3), die angepasst ist, eine Funktion zum Auswählen, aus dem ersten Anzeigeschirm (21A) und dem zweiten Anzeigeschirm (21B), eines Schirms, der ein Ziel für die Bedienung ist, auszuführen; und
eine Bedienungszielschirm-Umschaltsymbol-Anzeigeeinheit (6), die zum Ausführen einer Funktion zum Anzeigen eines Bedienungszielschirm-Umschaltsymbols (70A, 70B) mindestens auf dem Schirm, der durch die Bedienungszielschirm-Auswahleinheit (3) ausgewählt wurde, angepasst ist, wenn die
Anzeigezustandserfassungseinheit (3) erfasst, dass sowohl der erste Anzeigeschirm (21A) als auch der zweite Anzeigeschirm (21B) in einem Zustand sind, in dem eine Anzeige möglich ist, wobei
die Bedienungszielschirm-Auswahleinheit (3) angepasst ist, die Auswahl eines Bedienungszielschirms umzuschalten, wenn das Bedienungszielschirm-Umschaltsymbol (70A, 70B) ausgewählt wird;
die erste Hauptanzeigeeinheit (20A) und die zweite Hauptanzeigeeinheit (20B) durch eine Gelenkeinheit (40B) verbunden sind;
die zweite Hauptanzeigeeinheit (20B) einen dritten Anzeigeschirm (21C) auf einer Rückseite des zweiten Anzeigeschirms (21B) umfasst;
wenn die Anzeigezustandserfassungseinheit (3) eine Änderung von einem gefalteten Zustand in einen offenen Zustand erfasst, das mobile Endgerät angepasst ist, automatisch, von dem dritten Anzeigeschirm (21C) zu dem zweiten Anzeigeschirm (21B), Anzeigeinhalt einer Anwendung, die auf dem dritten Anzeigeschirm (21C) angezeigt worden ist, umzuschalten, und die Bedienungszielschirm-Umschaltsymbol-Anzeigeeinheit (6) angepasst ist, das Bedienungszielschirm-Umschaltsymbol (70A, 70B) auf dem zweiten Anzeigeschirm (21B) zu erzeugen; und
wenn die Anzeigezustandserfassungseinheit (3) erfasst, dass die erste Hauptanzeigeeinheit (20A) und die zweite Hauptanzeigeeinheit (20B) in einem gefalteten Zustand sind, das mobile Endgerät angepasst ist, eine Anzeige sowohl des ersten Anzeigeschirms (21A) als auch des zweiten Anzeigeschirms (21B) zu beenden und den Anzeigeinhalt einer Anwendung auf dem dritten Anzeigeschirm (21C) anzuzeigen.

2. Mobiles Endgerät gemäß Anspruch 1, **dadurch gekennzeichnet, dass** die zweite Hauptanzeigeeinheit (20B) durch eine Gelenkeinheit oder durch ein Gleitsystem mit der ersten Hauptanzeigeeinheit (20A) verbunden ist.

3. Mobiles Endgerät gemäß Anspruch 1 oder 2, **dadurch gekennzeichnet, dass** es weiter eine Bedienungseinheit (30), die Eingabetasten (32) aufweist, umfasst, wobei die erste Hauptanzeigeeinheit (20A) und die Bedienungseinheit (30) durch eine Gelenkeinheit (40A) faltbar verbunden sind.

4. Mobiles Endgerät gemäß einem der Ansprüche 1 bis 3, **dadurch gekennzeichnet, dass** die zweite Hauptanzeigeeinheit (20B) so konfiguriert ist, dass sie bezüglich der ersten Hauptanzeigeeinheit (20A) anbringbar und abnehmbar ist.

5. Steuerprogramm für ein mobiles Endgerät gemäß einem der Ansprüche 1 bis 4,
wobei das Steuerprogramm, auf der Steuereinheit (4), ausführt: einen Schritt des Anzeigens, wenn die Anzeigezustandserfassungseinheit (3) erfasst, dass ein Anzeigeschirmzustand sich von einem Ein-Schirm-Anzeigezustand in einen Zustand, in dem eine Anzeige sowohl durch den ersten Anzeigeschirm (21A) als auch den zweiten Anzeigeschirm (21B) möglich ist, geändert hat, auf einem von dem ersten Anzeigeschirm (21A) oder dem zweiten Anzeigeschirm (21B) einer Anzeige, in der ein Bedienungszielschirm-Umschaltsymbol (70A, 70B) zu Inhalt, der in dem Ein-Schirm-Anzeigezustand angezeigt wird, hinzugefügt wird; und
einen Schritt des Umschaltens, wenn eine Erfassung erfolgt, dass das Bedienungszielschirm-Umschaltsymbol (70A, 70B) ausgewählt worden ist, eines Schirms, der ein Ziel für Bedienung ist, von einem von dem ersten Anzeigeschirm (21A) oder dem zweiten Anzeigeschirm (21B) zu einem anderen davon,
wobei das Steuerprogramm weiter ausführt, auf der Steuereinheit (4):
einen Schritt des automatischen Umschaltens, wenn die Anzeigezustandserfassungseinheit (3) eine Änderung von einem gefalteten Zustand zu einem offenen Zustand erfasst, des Anzeigeinhalts einer Anwendung, die auf dem dritten Anzeigeschirm (21C) angezeigt worden ist, von dem dritten Anzeigeschirm (21C) auf den zweiten Anzeigeschirm (21B) und ebenfalls Erzeugen des Bedienungszielschirm-Umschaltsymbols (70A, 70B) auf dem zweiten Anzeigeschirm (21B); und
einen Schritt des Beendens der Anzeige, wenn die Anzeigezustandserfassungseinheit (3) erfasst, dass die erste Hauptanzeigeeinheit (20A) und die zweite Hauptanzeigeeinheit (20B) in einem gefalteten Zustand sind, sowohl des ersten Anzeigeschirms (21A) als auch des zweiten Anzeigeschirms (21B) und Anzeigen von Anzeigeinhalt einer Anwendung auf dem dritten Anzeigeschirm (21C).

6. Steuerverfahren für mehrere Anzeigeschirme für ein mobiles Endgerät gemäß einem der Ansprüche 1 bis 4,
wobei das Verfahren die Schritte umfasst:
Anzeigen auf einem von dem ersten Anzeigeschirm (21A) oder dem zweiten Anzeigeschirm (21B) einer Anzeige, in der ein Bedienungszielschirm-Umschaltsymbol (70A, 70B) zu Inhalt, der in einem Ein-Schirm-Anzeigezustand angezeigt wird, hinzugefügt wird, wenn die Anzeigezustandserfassungseinheit (3) erfasst, dass ein Anzeigeschirmzustand sich von dem Ein-Schirm-Anzeigezustand in einen Zustand geändert hat, in dem eine Anzeige durch sowohl den ersten Anzeigeschirm (21A) als auch den zweiten Anzeigeschirm (21B) möglich ist; und
Umschalten eines Schirms, der ein Ziel für Bedienung ist, von einem von dem ersten Anzeigeschirm (21A) oder dem zweiten Anzeigeschirm (21B) auf einen anderen davon, wenn das Bedienungszielschirm-Umschaltsymbol (70A, 70B) durch das Symbolauswahlmittel ausgewählt wird,
automatisches Umschalten, von dem dritten Anzeigeschirm (21C) auf den zweiten Anzeigeschirm (21B), des Anzeigeinhalts einer Anwendung, die auf dem dritten Anzeigeschirm (21C) angezeigt worden ist, und ebenfalls Erzeugen des Bedienungszielschirm-Umschaltsymbols (70A, 70B) auf dem zweiten Anzeigeschirm (21B), wenn die Anzeigezustandserfassungseinheit (3) eine Änderung von einem gefalteten Zustand in einen offenen Zustand erfasst; und
Beenden der Anzeige sowohl des ersten Anzeigeschirms (21A) als auch des zweiten Anzeigeschirms (21B) und Anzeigen von Anzeigeinhalt einer Anwendung auf dem dritten Anzeigeschirm (21C), wenn die Anzeigezustandserfassungseinheit (3) erfasst, dass die erste Hauptanzeigeeinheit (20A) und die zweite Hauptanzeigeeinheit (20B) in einem gefalteten Zustand sind.

7. Computerlesbares Aufzeichnungsmedium, welches das Steuerprogramm gemäß Anspruch 5 speichert.

## Revendications

1. Dispositif terminal mobile (10) comprenant :
une première unité d'affichage principale (20A) qui comporte un premier écran d'affichage (21A) ;
une deuxième unité d'affichage principale (20B) qui comporte un deuxième écran d'affichage (21B) qui peut fournir un affichage équivalent audit premier écran d'affichage (21A), ladite deuxième unité d'affichage principale (20B) étant raccordée de façon à être capable d'être juxtaposée à ladite première unité d'affichage principale (20A) ;
une unité de commande (4) adaptée à effectuer une commande globale ;
une unité de détection d'état d'affichage (3) qui est adaptée à détecter si ledit premier écran d'affichage (21A) et ledit deuxième écran d'affichage (21B) sont tous deux ou non dans un état où un affichage simultané est possible ;
une unité de sélection d'écran cible d'opération (3) qui est adaptée à exécuter une fonction pour sélectionner, parmi ledit premier écran d'affichage (21A) et ledit deuxième écran d'affichage (21B), un écran qui est une cible d'opération ; et
une unité d'affichage d'icône de permutation d'écran cible d'opération (6) qui est adaptée à exécuter une fonction pour afficher une icône de permutation d'écran cible d'opération (70A, 70B) au moins sur l'écran sélectionné par ladite unité de sélection d'écran cible d'opération (3), lorsque ladite unité de détection d'état d'affichage (3) détecte que ledit premier écran d'affichage (21A) et ledit deuxième écran d'affichage (21B) sont tous deux dans un état dans lequel un affichage est possible, dans lequel
ladite unité de sélection d'écran cible d'opération (3) est adaptée à permuter une sélection d'un écran cible d'opération lorsque ladite icône de permutation d'écran cible d'opération (70A, 70B) est sélectionnée ;
ladite première unité d'affichage principale (20A) et ladite deuxième unité d'affichage principale (20B) sont raccordées par une unité d'articulation (40B) ;
ladite deuxième unité d'affichage principale (20B) comprend un troisième écran d'affichage (21C) sur un côté arrière dudit deuxième écran d'affichage (21B) ;
lorsque ladite unité de détection d'état d'affichage (3) détecte un changement d'un état plié à un état ouvert, le dispositif terminal mobile est adapté à permuter automatiquement, dudit troisième écran d'affichage (21C) audit deuxième écran d'affichage (21B), le contenu d'affichage d'une application qui a été affiché sur ledit troisième écran d'affichage (21C), et ladite unité d'affichage d'icône de permutation d'écran cible d'opération (6) est adaptée à générer ladite icône de permutation d'écran cible d'opération (70A, 70B) sur ledit deuxième écran d'affichage (21B) ; et
lorsque ladite unité de détection d'état d'affichage (3) détecte que ladite première unité d'affichage principale (20A) et ladite deuxième unité d'affichage principale (20B) sont dans un état plié, le dispositif terminal mobile est adapté à arrêter l'affichage à la fois dudit premier écran d'affichage (21A) et dudit deuxième écran d'affichage (21B), et à afficher, sur ledit troisième écran d'affichage (21C), un contenu d'affichage d'une application.

2. Dispositif terminal mobile selon la revendication 1, **caractérisé en ce que** ladite deuxième unité d'affichage principale (20B) est raccordée par une unité d'articulation ou par un système coulissant à ladite première unité d'affichage principale (20A).

3. Dispositif terminal mobile selon la revendication 1 ou 2, **caractérisé en ce qu'**il comprend en outre une unité d'opération (30) qui comporte des touches d'entrée (32), dans lequel ladite première unité d'affichage principale (20A) et ladite unité d'opération (30) sont raccordées de façon pliable par une unité d'articulation (40A).

4. Dispositif terminal mobile selon l'une quelconque des revendications 1 à 3, **caractérisé en ce que** ladite deuxième unité d'affichage principale (20B) est configurée pour pouvoir être attachée et détachée par rapport à ladite première unité d'affichage principale (20A).

5. Programme de commande pour un dispositif terminal mobile selon l'une quelconque des revendications 1 à 4,
ledit programme de commande exécutant, sur ladite unité de commande (4) :
une étape, lorsque ladite unité de détection d'état d'affichage (3) détecte qu'un état d'écran d'affichage a changé d'un état d'affichage à un écran à un état dans lequel un affichage est possible à la fois par ledit premier écran d'affichage (21A) et ledit deuxième écran d'affichage (21B), consistant à afficher sur l'un dudit premier écran d'affichage (21A) ou dudit deuxième écran d'affichage (21B) un affichage dans lequel une icône de permutation d'écran cible d'opération (70A, 70B) est ajoutée à un contenu affiché dans ledit état d'affichage à un écran ; et
une étape, lorsqu'une détection est réalisée indiquant que ladite icône de permutation d'écran cible d'opération (70A, 70B) a été sélectionnée, consistant à permuter un écran qui est une cible d'opération de l'un dudit premier écran d'affichage (21A) ou dudit deuxième écran d'affichage (21B) à un autre de celui-ci,
ledit programme de commande exécutant en outre, sur ladite unité de commande (4) :
une étape, lorsque ladite unité de détection d'état d'affichage (3) détecte un changement d'un état plié à un état ouvert, consistant à permuter automatiquement, dudit troisième écran d'affichage (21C) audit deuxième écran d'affichage (21B), le contenu d'affichage d'une application qui a été affiché sur ledit troisième écran d'affichage (21C), et également à générer ladite icône de permutation d'écran cible d'opération (70A, 70B) sur ledit deuxième écran d'affichage (21B) ; et
une étape, lorsque ladite unité de détection d'état d'affichage (3) détecte que ladite première unité d'affichage principale (20A) et ladite deuxième unité d'affichage principale (20B) sont dans un état plié, consistant à arrêter l'affichage à la fois dudit premier écran d'affichage (21A) et dudit deuxième écran d'affichage (21B), et à afficher, sur ledit troisième écran d'affichage (21C), un contenu d'affichage d'une application.

6. Procédé de commande d'écrans d'affichage multiples pour un dispositif terminal mobile selon l'une quelconque des revendications 1 à 4,
ledit procédé comprenant les étapes de :
affichage sur l'un dudit premier écran d'affichage (21A) ou dudit deuxième écran d'affichage (21B) d'un affichage dans lequel une icône de permutation d'écran cible d'opération (70A, 70B) est ajoutée à un contenu affiché dans un état d'affichage à un écran, lorsque ladite unité de détection d'état d'affichage (3) détecte qu'un état d'écran d'affichage a changé d'un état d'affichage à un écran à un état dans lequel un affichage est possible à la fois par ledit premier écran d'affichage (21A) et ledit deuxième écran d'affichage (21B) ; et
permutation d'un écran qui est une cible d'opération de l'un dudit premier écran d'affichage (21A) ou dudit deuxième écran d'affichage (21B) à un autre de celui-ci, lorsque ladite icône de permutation d'écran cible d'opération (70A, 70B) est sélectionnée par lesdits moyens de sélection d'icône,
permutation automatique, dudit troisième écran d'affichage (21C) audit deuxième écran d'affichage (21B), du contenu d'affichage d'une application qui a été affiché sur ledit troisième écran d'affichage (21C), et également génération de ladite icône de permutation d'écran cible d'opération (70A, 70B) sur ledit deuxième écran d'affichage (21B), lorsque ladite unité de détection d'état d'affichage (3) détecte un changement d'un état plié à un état ouvert ; et
arrêt de l'affichage à la fois dudit premier écran d'affichage (21A) et dudit deuxième écran d'affichage (21B) et affichage, sur ledit troisième écran d'affichage (21C), d'un contenu d'affichage d'une application, lorsque ladite unité de détection d'état d'affichage (3) détecte que ladite première unité d'affichage principale (20A) et ladite deuxième unité d'affichage principale (20B) sont dans un état plié.

7. Support d'enregistrement lisible par ordinateur qui stocke ledit programme de commande selon la revendication 5.
